# EUROPEAN PATENT APPLICATION

(11) **EP 4 693 813 A1**
(43) Date of publication of application: **11.02.2026**
(21) Application number: 25157220.2
(22) Date of filing: 11.02.2025
(51) Int. Cl.: H02J 9/06, H02J 7/00, H02J 7/34

(54) **POWER CONVERSION DEVICE AND UNINTERRUPTIBLE POWER SYSTEM**

(30) Priority: 08.08.2024 CN 202421913768 U
(71) Applicant: Vertiv Corporation, Westerville, OH 43082 (US)
(72) Inventor: ZHANG, Zhichao, Shenzhen, 518055 (CN); GONG, Ping, Shenzhen, 518055 (CN)
(74) Representative: Harden, Henry Simon

(57) **Abstract**

Provided are a power conversion device and an uninterruptible power system, with which a cost and a volume of the power conversion device are reduced. The power conversion device includes a conversion circuit (L1-L3, D1-D6, Q1-Q6), a bus capacitor branch (C1, C2), a resistor module (R1, R2), a first switch module (K1, K2) and a controller; an input terminal of the conversion circuit is connected to a power supply, and an output terminal of the conversion circuit is connected to the bus capacitor branch (C1, C2) through the resistor module (R1, R2); the first switch module (K1, K2) is connected in parallel with the resistor module (R1, R2); and the controller is connected to the first switch module (K1, K2) and is configured to control the first switch module (K1, K2) to be turned off in a case where the conversion circuit is connected to the power supply and a voltage of the bus capacitor branch (C1, C2) is less than a preset threshold, and control the first switch module (K1, K2) to be turned on in a case where a voltage of the bus capacitor branch (C1, C2) is greater than or equal to the preset threshold. When pre-charging of a bus capacitor is required, the first switch module (K1, K2) may be controlled to be turned off and the resistor module (R1, R2) serves as a current limiting resistor for charging the bus capacitor branch. When charging of the bus capacitor branch is completed, the first switch module (K1, K2) is controlled to be turned on to eliminate a loss caused by the resistor module (R1, R2) during normal power supply.

## Description

The present application claims priority to Chinese Patent Application No. 202421913768.3, titled "POWER CONVERSION DEVICE AND UNINTERRUPTIBLE POWER SYSTEM", filed on August 08, 2024 with the China National Intellectual Property Administration, which is incorporated herein by reference in its entirety.

### FIELD

The present disclosure relates to the technical field of power electronics, and in particular to a power conversion device and an uninterruptible power system.

### BACKGROUND

With the continuous development of the Internet and financial industries, safe and reliable operation of equipment becomes important, and the uninterruptible power system (UPS) plays an important role as a key power supply device.

The UPS is equipped with multiple devices inside, including a rectifier, a battery pack, and a battery charger and discharger. The rectifier may convert a voltage of an external AC power supply into a supply voltage of a load and power the load. In a case where the external AC power supply fails, the battery charger and discharger may convert electric energy stored in the battery pack into the supply voltage of the load and power the load. In actual use, the output side of the rectifier is configured with a bus capacitor for stabilizing an output voltage. The bus capacitor is connected to the load. Before the UPS is started, there is no voltage on the bus capacitor. When the UPS is directly connected to an AC power supply or the bus capacitor is connected to a battery pack through a battery charger and discharger, an inrush current is generated in the lines of the UPS and causes damage to the UPS. At present, a dedicated pre-charging circuit is conventionally adopted in the art. The pre-charging circuit may charge the bus capacitor to a set value to reduce a voltage difference between the bus capacitor and the power supply, thereby ensuring safety of the UPS. However, the additional pre-charging circuit results in an increased space and cost of the UPS, and an increase difficulty in designing the UPS.

### SUMMARY

The present disclosure provides a power conversion device and an uninterruptible power system, with which a cost and a volume of the power conversion device are reduced.

In a first aspect, a power conversion device is provided according to an embodiment of the present disclosure. The power conversion device is applicable to a scenario where a high-power power supply system is provided with a bus capacitor at an output end of an internal conversion circuit of the power supply system. The power conversion device includes a conversion circuit, a bus capacitor branch, a resistor module, a first switch module and a controller.

An input terminal of the conversion circuit is connected to a power supply, and an output terminal of the conversion circuit is connected to the bus capacitor branch through the resistor module; the first switch module is connected in parallel with the resistor module; and the controller is connected to the first switch module and is configured to control the first switch module to be turned off in a case where the conversion circuit is connected to the power supply and a voltage of the bus capacitor branch is less than a preset threshold, and control the first switch module to be turned on in a case where a voltage of the bus capacitor branch is greater than or equal to the preset threshold.

With the above design, when the power conversion device is connected to the power supply and the bus capacitor branch has a low voltage, the controller may control the first switch to be turned off, in order to avoid damage to a device due to a large voltage difference between the power supply voltage and the bus capacitor branch. In this case, the resistor module is connected to a charging circuit of the bus capacitor branch, and serves as a current limiting resistor in the charging circuit, to reduce a current amplitude in the charging circuit. In this way, device safety is ensured while pre-charging the bus capacitor branch. After the pre-charging of the bus capacitor branch is completed, the first switch module may be controlled to short-circuit the resistor module, to eliminate a loss caused by the resistor module during normal operation. In the above design, the pre-charging of the bus capacitor can be realized by simply adding the switch module and the resistor module, and therefore the cost and the volume of the power conversion device are reduced.

In a possible design, depending on an application scenario of the power conversion device, the bus capacitor branch in the power conversion device may include one bus capacitor or two bus capacitors. In order to complete the pre-charging of each bus capacitor, the resistor module includes a first resistor which is in one-to-one correspondence with each bus capacitor in the bus capacitor branch, and the first resistor is connected in series with a corresponding bus capacitor.

In a possible design, the resistor in the resistor module is a thermistor. With the above design, as the charging time of the bus capacitor branch increases, the voltage across the bus capacitor branch increases, that is, a voltage difference between the power supply voltage and the bus capacitor branch decreases. In order to reduce a loss during the pre-charging process, a thermistor whose resistance decreases as the temperature increases may be adopted to improve an efficiency of the pre-charging.

In a possible design, the bus capacitor branch includes multiple bus capacitors, and the resistor module is provided with resistor devices connected in series with the bus capacitors, respectively. In order to control a connection relationship of the resistor devices, the first switch module includes first switches which are in one-to-one correspondence with each first resistor. Each of the first switches is connected in parallel with a corresponding one of the first resistors, and a control terminal of each of the first switches is connected to the controller.

In a possible design, the power conversion device is applied to a high-power power supply scenario, for example, the power conversion device is applied to an uninterruptible power system or photovoltaic power generation system. In this case, the power conversion device further includes a battery pack and a battery charging and discharging circuit. The battery pack is connected to a first terminal of the battery charging and discharging circuit. A second terminal of the battery charging and discharging circuit is connected to the output terminal of the conversion circuit.

In a possible design, the controller is further configured to: control the first switch module to be turned off in a case where the battery pack is electrically connected to the bus capacitor branch through the battery charging and discharging circuit, and a voltage of the bus capacitor branch is less than the preset threshold, and control the first switch module to be turned on in a case where a voltage of the bus capacitor branch is greater than or equal to the preset threshold. With the above design, when the power conversion device is provided with the battery pack, the power conversion device may pre-charge the bus capacitor branch with electric energy stored in the battery pack.

In a possible design, the power conversion device further includes a second switch module connected between the input terminal of the conversion circuit and the power supply, and the second switch module is configured to control a connection between the conversion circuit and the power supply.

In a possible design, the power conversion device further includes a third switch module connected between the battery pack and the charging and discharging circuit, and the third switch module is configured to control a connection between the battery pack and the charging and discharging circuit.

In a possible design, the power conversion device further includes a voltage sensor, the voltage sensor is connected to the bus capacitor branch and the controller, and the voltage sensor is configured to detect a voltage of the bus capacitor branch and output a detected voltage to the controller.

In a second aspect, an uninterruptible power system is provided in an embodiment of the present disclosure. The uninterruptible power system includes an inverter, and the power conversion device provided in the first aspect of the embodiment of the present disclosure and any of the possible designs thereof.

An input terminal of the inverter is connected to an output terminal of the conversion circuit, and an output terminal of the inverter is connected to the load. The inverter may convert a voltage outputted by the conversion circuit into a supply voltage of the load, and supply power to the load.

In addition, the technical effects brought by the second aspect and any possible design thereof may be referred to the technical effects brought by the different designs in the first aspect of the embodiments of the present disclosure, and are not described in further detail here.

### BRIEF DESCRIPTION OF THE DRAWINGS

For clearer illustration of the technical solutions according to embodiments of the present disclosure, hereinafter briefly described are the drawings to be applied in embodiments of the present disclosure. Apparently, the drawings as provided in the following descriptions are only some embodiments of the present disclosure, and other drawings may be obtained by those skilled in the art based on the provided drawings without any creative effort.
Figure 1 is a first schematic structural diagram of a power conversion device according to an embodiment of the present disclosure;
Figure 2 is a schematic structural diagram of a power conversion device according to a first embodiment of the present disclosure;
Figure 3 is a schematic structural diagram of a conversion circuit according to a first embodiment of the present disclosure;
Figure 4 is a first schematic structural diagram of a first switch module according to a first embodiment of the present disclosure;
Figure 5 is a second schematic structural diagram of a first switch module according to an embodiment of the present disclosure;
Figure 6 is a schematic structural diagram of a power conversion device according to a second embodiment of the present disclosure;
Figure 7 is a schematic structural diagram of a conversion circuit according to a second embodiment of the present disclosure;
Figure 8 is a third schematic structural diagram of a power conversion device according to an embodiment of the present disclosure;
Figure 9 is a fourth schematic structural diagram of a power conversion device according to an embodiment of the present disclosure; and
Figure 10 is a fifth schematic structural diagram of a power conversion device according to an embodiment of the present disclosure.

### DETAILED DESCRIPTION

Hereinafter applications of the technical solution of embodiments of the present disclosure are introduced in conjunction with the drawings of the embodiments of the present disclosure. The solution provided in the embodiments of the present disclosure is applicable to a scenario where a high-power power supply system has a rectifier which is equipped with a bus capacitor for filtering and stabilizing an output voltage. The power supply system may be, but is not limited to, an uninterruptible power system (UPS), a photovoltaic power generation system or a vehicle charger.

In practical applications, an output terminal of the power conversion device is equipped with a bus capacitor for filtering and stabilizing an output voltage. When the power supply system is initially started or resumed after maintenance, there is no voltage on the bus capacitor. Therefore, as the power supply system is connected to a power supply, there is a large difference between the voltage of the bus capacitor and a voltage of an external power supply. In this case, when the power supply system is connected directly to the power supply, an inrush current may generate in the lines of the power conversion device, causing damage to internal components of the power conversion device and components connected to the power conversion device. At present, an additional pre-charging circuit is often adopted in the industry. The voltage of the bus capacitor is pre-charged to a set value, and then the power conversion device is controlled to be connected to the power supply, so as to ensure a normal operation of the power conversion device. However, the additional pre-charging circuit causes increase of a cost of the power conversion device and increase of a volume of the power conversion device, making design of the power conversion device more difficult.

In view of this, embodiments of the present disclosure provide a power conversion device and an uninterruptible power system, with which a cost and a volume of the power conversion device are reduced.

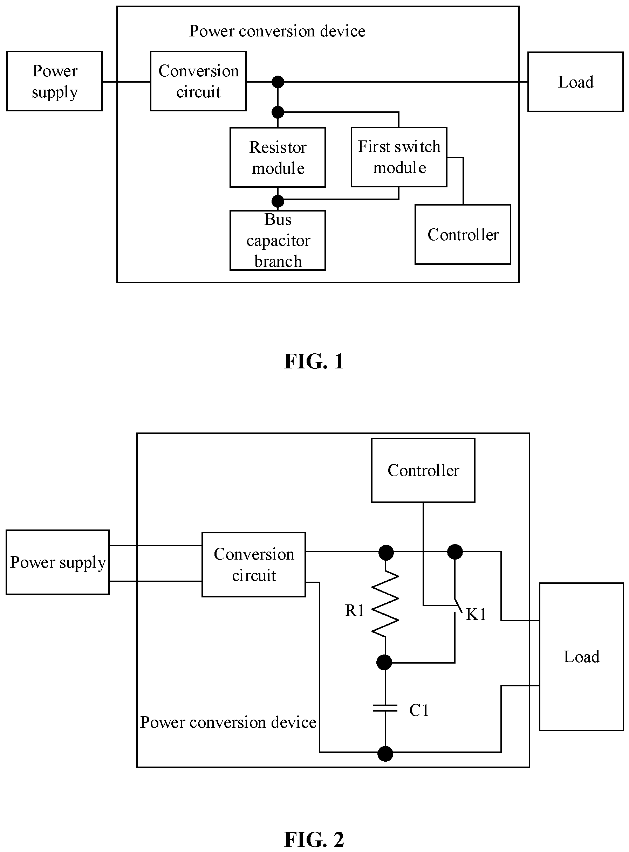

The power conversion device provided in the embodiments of the present disclosure is applicable to a high-power power supply system, and serves as an external power supply connection to the power supply system. The power conversion device operates to convert a voltage of the external power supply into a DC voltage having a fixed-amplitude, and utilize the DC voltage to directly power a load or other device in the power supply system. Reference is made to Figure 1, which is a schematic structural diagram of a power conversion device according to an embodiment of the present disclosure. As shown in Figure 1, the power conversion device includes a conversion circuit, a bus capacitor branch, a resistor module, a first switch module and a controller.

Specifically, an input terminal of the conversion circuit is connected to a power supply, and an output terminal of the conversion circuit is connected to the bus capacitor branch through the resistor module; the first switch module is connected in parallel with the resistor module; and the controller is connected to the first switch module and is configured to control the first switch module to be turned off in a case where the conversion circuit is connected to the power supply and a voltage of the bus capacitor branch is less than a preset threshold, and control the first switch module to be turned on in a case where a voltage of the bus capacitor branch is greater than or equal to the preset threshold. The preset threshold may be set based on a power supply voltage and models of devices inside the power conversion device. For example, the preset threshold may be set to 80% of the power supply voltage. Apparently, the preset threshold may be set to other value, which is not limited here in the present disclosure.

It should be noted that, depending on the application of the power supply system to which the power conversion device belongs, the power supply may be a DC power supply or an AC power supply. For example, in a case where the power supply system is a UPS or a vehicle charger, the power supply may be an AC power grid. In a case where the power supply system is a light-emitting power generation system, the power supply may be a photovoltaic panel for outputting direct current.

In practical applications, the power conversion device may be regarded as a device independent of other devices in the power supply system. The power conversion device may be arranged to be detachable form other devices in the power supply system in a flexible manner. For example, the power conversion device is provided with a fixed external interface, and other devices in the power supply system may be connected to the power conversion device through the external interface. Alternatively, the power conversion device may be packaged as an integral device with other devices in the power supply system.

When the power conversion device as shown in Figure 1 pre-charges the bus capacitor in the bus capacitor branch, the conversion circuit is connected to the bus capacitor branch through the resistor module, and the first switch module is connected in parallel across the resistor module. Hence, when the controller detects that a bus capacitor voltage in the bus capacitor branch is less than the preset threshold, in order to avoid an inrush current in the lines of the power conversion device, the first switch module connected in parallel with the resistor module may be controlled to be turned off. In this case, the resistor module is connected to the bus capacitor branch, and the resistor module serves as a current-limiting resistor to reduce a current amplitude on the lines of the power conversion device during operation of the conversion circuit and charge the bus capacitor in the bus capacitor branch. As the charging time increases, the voltage across the bus capacitor in the bus capacitor branch increases. When the controller detects that the voltage across the bus capacitor is charged to the preset threshold, the controller may control the first switch module connected in parallel with the resistor module to be turned on. In this case, the resistor module is removed from a main line of the power conversion device, and the power conversion device operates normally and starts supplying power. To pre-charge the bus capacitor through the above-described method, a pre-charge power can be realized by simply adding the first switch module and the resistor module to the power conversion device structure. Compared with a manner of configuring a separate pre-charging circuit in the art, the above-described method achieves a reduced cost for the power conversion device and a reduced volume of the power conversion device.

In an actual application, based on an application scenario of the power conversion device, the bus capacitor branch includes one or more bus capacitor. To realize a normal pre-charging of the bus capacitor, the resistor module includes a first resistor which is in one-to-one correspondence with each bus capacitor in the bus capacitor branch. The first resistor is connected in series with a corresponding bus capacitor and serves as a current limiting resistor during the pre-charging process of the bus capacitor. In order to control an end time of the pre-charging of the bus capacitor, the first switch module is further provided with a first switch which is in one-to-one correspondence with each first resistor. The first switch is connected in parallel with a corresponding first resistor, and a control terminal of the first switch is connected to the controller.

Based on the above description, depending on the number of bus capacitors in the bus capacitor branch, the power conversion device provided by the embodiments of the present disclosure may have different topologies. Hereinafter situations where the bus capacitor branch includes one bus capacitor or two bus capacitors are described respectively in conjunction with embodiments.

Reference is made to Figure 2, which is a schematic structural diagram of a power conversion device according to a first embodiment of the present disclosure. As shown in Figure 2, a bus capacitor branch includes one bus capacitor C1, a resistor module includes a first resistor R1 corresponding to the bus capacitor C1, and a first switch module includes a first switch K1 corresponding to the first resistor R1.

Reference is made to Figure 2. The bus capacitor C1 is connected to a conversion circuit through the first resistor R1. The conversion circuit may obtain electric energy from an external power supply and convert the electric energy into a charging voltage of the bus capacitor C1.

In an example, in a case where the power supply connected to the conversion circuit is an AC power supply, the conversion circuit may be implemented by a single-phase rectifier or three-phase rectifier. The rectifier may have a bridge rectification structure. Apparently, other circuits in the industry having the rectification function as mentioned above are possible.

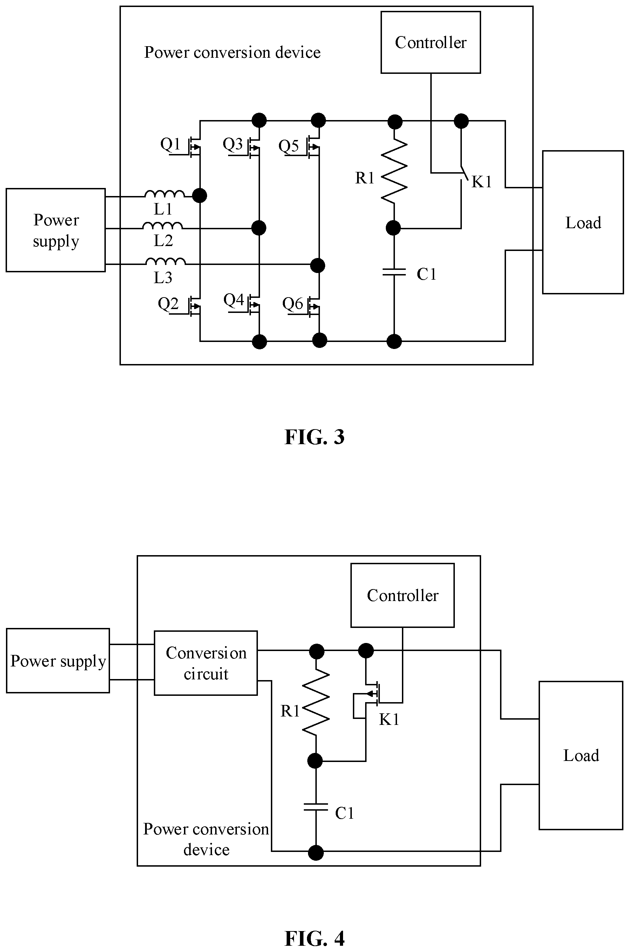

In an implementation, the conversion circuit is a three-phase bridge rectifier topology, and the structure of the power conversion device is as shown in Figure 3. As shown in Figure 3, a conversion circuit is formed by switch transistors Q1 to Q6 and inductors L1 to L3. In a case where the power conversion device is connected to a three-phase AC power supply, parasitic diodes of the switch transistors Q1 to Q6 perform uncontrolled rectification on the three-phase AC power supply to obtain a DC voltage. The DC voltage may be current-limited by the first resistor R1 and then the bus capacitor C1 is charged by the current-limited DC voltage.

In an example, the power supply connected to the conversion circuit is a DC power supply, for example, the power conversion device is applied in a photovoltaic power generation system. In this case, the conversion circuit may be connected to a photovoltaic panel and boost a DC voltage outputted by the photovoltaic panel, so that an inverter connected at the back stage performs an inversion and grid-connection process to the DC voltage. The conversion circuit may have a DC/DC conversion structure. Other topologies are possible, which is not specifically limited in the present disclosure.

In a case where the power conversion device as shown in Figure 2 or Figure 3 pre-charges the bus capacitor C1, when the power conversion device is connected to an external power supply through the conversion circuit, the conversion circuit may convert a voltage of the external power supply into a DC voltage and the bus capacitor C1 is charged by the DC voltage through the first resistor R1 with a current limiting function. A charging time of the bus capacitor C1 may be configured through the resistance of the first resistor R1 and the capacitance of the bus capacitor C1, which is not described in detail here in the present disclosure.

In a possible implementation, the first switch K1 is a switch transistor, which may be, but is not limited to a metal oxide semiconductor field effect transistor (MOSFET) and an insulated gate bipolar transistor (IGBT). The controller may be connected to a control end of the first switch K1. For example, the first switch K1 is a MOSFET, and a structure of the power conversion device is as shown in Figure 4.

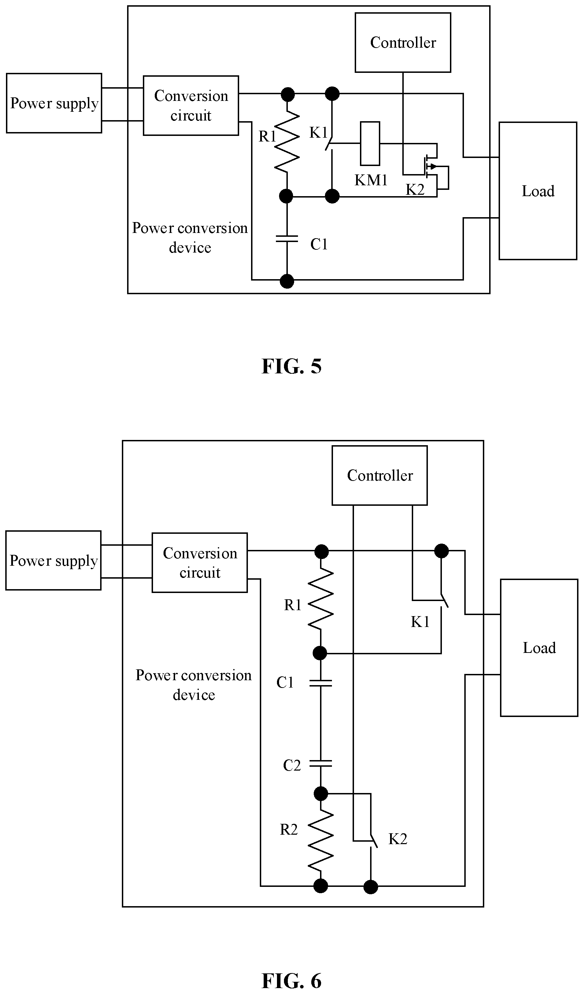

In a possible implementation, the first switch K1 serves as a contact of a relay KM1, and the coil of the relay KM1 is connected to the bus capacitor C1 through a second switch K2. The second switch K2 may be a switch transistor, and a control end of the second switch K2 is connected to the controller. The controller may control the coil of the relay KM1 to be energized or de-energized by controlling on/off of the second switch K2, and thereby control to turn on or turn off the first switch K1. A structure of the power conversion device may be as shown in Figure 5.

In an example, the controller and the coil of the relay KM1 are powered by the bus capacitor. In order to avoid a failure of controlling a switching state due to lack of electric energy on the bus capacitor C1, the first switch K1 may be implemented as a normally open contact of the relay KM1. In a case where the second switch K2 is turned off due to inability of the controller to obtain electric energy, the first switch K1 is turned off and the bus capacitor C1 is pre-charged through the first resistor R1.

In an example, the controller and the coil of the relay KM1 are connected to an external DC power supply. In this case, the first switch K1 may be implemented as a normally open contact of the relay KM1 or a normally closed contact of the relay KM1.

Reference is made to Figure 6, which is a schematic structural diagram of a power conversion device according to a second embodiment of the present disclosure. As shown in Figure 6, a bus capacitor branch includes a bus capacitor C1 and a bus capacitor C2, a resistor module includes a first resistor R1 corresponding to the bus capacitor C1 and a first resistor R2 corresponding to the bus capacitor C1, and a first switch module includes a first switch K1 corresponding to the first resistor R1 and a first switch K2 corresponding to the first resistor R2.

Reference is made to Figure 6. The bus capacitor C1 is connected to a conversion circuit through the resistor R1, and the bus capacitor C2 is connected to the conversion circuit through the resistor R2. The conversion circuit may obtain electric energy from an external power supply and convert the electric energy into a charging voltage of the bus capacitor C1 and the bus capacitor C2.

In an example, the power supply connected to the conversion circuit is an AC power supply, and the conversion circuit may be implemented by a single-phase rectifier or three-phase rectifier. The rectifier may have a bridge rectification structure. Apparently, other circuits in the industry having a rectification function as mentioned above are possible.

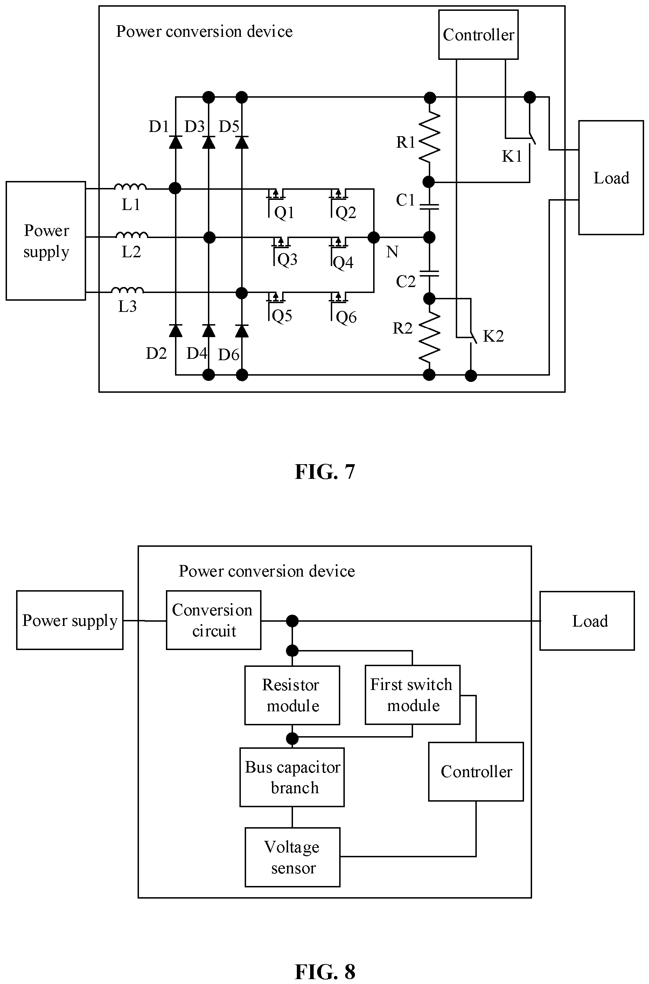

In an implementation, the conversion circuit is a three-phase Vienna rectifier topology, and the structure of the power conversion device is as shown in Figure 7. As shown in Figure 7, a conversion circuit is formed by switch transistors Q1 to Q6, diodes D1 to D6, and inductors L1 to L3. In a case where the power conversion device is connected to a three-phase AC power supply, the diodes D1 to D6 perform uncontrolled rectification on the three-phase AC power supply to obtain a DC voltage. The DC voltage may be current-limited by the resistor R1 and the resistor R2 and then the bus capacitor C1 and the bus capacitor C2 are charged by the DC voltage.

In an example, the power supply connected to the conversion circuit is a DC power supply, and the conversion circuit may have a DC/DC conversion structure. Other topologies are possible, which is not specifically limited in the present disclosure.

In a case where the power conversion device as shown in Figure 6 or Figure 7 pre-charges the bus capacitor C1 and the bus capacitor C2, when the power conversion device is connected to an external power supply through the conversion circuit, the controller controls both the first switch K1 and the second K2 to be turned off. In this case, the conversion circuit may convert a voltage of the external power supply into a DC voltage. The bus capacitor C1 and the bus capacitor C2 are charged by the DC voltage through a serial-connected circuit formed by the resistor R1, the bus capacitor C1, the bus capacitor C2 and the resistor R2. A charging time of the bus capacitor C1 and the bus capacitor C2 may be configured through the resistance of the resistor R1, the resistance of the resistor R2, and the capacitances of the two bus capacitors, which is not described in detail here in the present disclosure.

It should be noted that an implementation of the first switch K1 and the first switch K2 may be found in the relevant description in the first embodiment, and is not repeated here.

Referring to the power conversion device shown in Figure 2 to Figure 7, the controller in the power conversion device controls the switching device in the first switch module through the bus capacitor voltage. In an actual application, the controller may be connected to a voltage sensor external to the power conversion device, and acquires a voltage of the bus capacitor branch through the voltage sensor. Alternatively, the power conversion device may be provided with an internal voltage sensor, as shown in Figure 8. The voltage sensor may be connected to the bus capacitor branch and the controller, and be configured to detect a voltage of the bus capacitor branch and output the detected voltage value to the controller, so that the controller may control the switching device in the first switch module based on the detected voltage value from the voltage sensor. The voltage sensor may be a device having a voltage detection function commonly used in the industry, such as a Hall sensor.

It should be noted that the structure of the power conversion device in a case where the bus capacitor branch includes one bus capacitor or two bus capacitors is only an example. In an actual application, the power conversion device may have another topology. For example, the bus capacitor may be formed by multiple capacitors connected in parallel, and the first resistor corresponding to the bus capacitor may be formed by multiple resistors connected in series or in parallel.

In an actual application, depending on an application scenario of the power conversion device, in addition to the above-mentioned devices, the power conversion device may further include other functional devices, which are configured as follows.

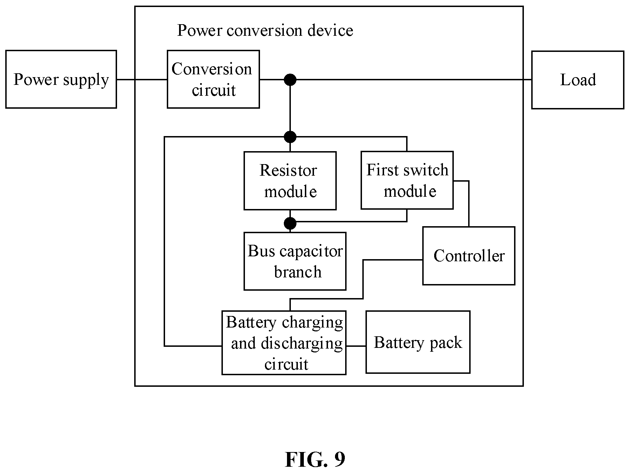

In a possible implementation, in order to output electric energy to the load for a long time and stabilize an output voltage to the load, the power conversion device may further include a battery pack and a battery charging and discharging circuit, in addition to the above-mentioned devices, as shown in Figure 9. As shown in Figure 9, the battery pack is connected to a first terminal of the battery charging and discharging circuit, and a second terminal of the battery charging and discharging circuit is connected to the output terminal of the conversion circuit.

Specifically, when the power conversion device shown in Figure 9 outputs the electric energy to the load, if the external power supply operates normally, the conversion circuit may rectify the electric energy outputted by the power supply. Part of the rectified electric energy is directly output to the load connected at the back stage, and the other part of the rectified electric energy may be charged to the battery pack through the battery charging and discharging circuit. In a case where the external power supply fails to provide the electric energy required for operation of the load, the electric energy stored in the battery pack may be voltage-regulated through the battery charging and discharging circuit and then outputted to the load connected at the back stage, to output the electric energy to the load. In this way, a stability of power supply of the power conversion device is improved.

The battery pack may be formed by one or more batteries. In a case where the battery pack includes multiple batteries, the batteries may be connected in series or in parallel. The battery charging and discharging circuit may be implemented by a circuit or chip having a voltage boosting function and a voltage reducing function that is common in the industry, which is not specifically limited in the present disclosure.

In an actual application, there is electric energy stored in the battery pack, with the power conversion device structure shown in Figure 9. The controller may pre-charge the bus capacitor branch with the electric energy stored in the battery pack. The controller may be configured to: control the first switch module to be turned off in a case where the battery pack is electrically connected to the bus capacitor branch through the battery charging and discharging circuit, and a voltage of the bus capacitor branch is less than the preset threshold; and control the first switch module to be turned on in a case where a voltage of the bus capacitor branch is greater than or equal to the preset threshold.

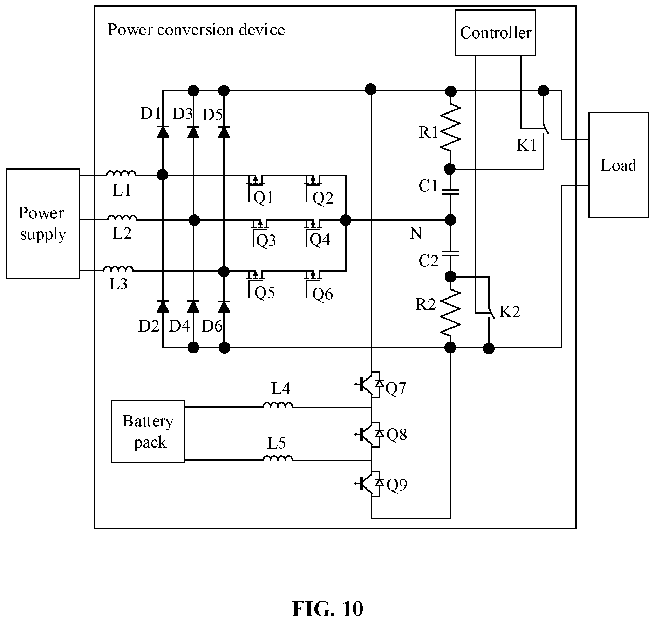

For ease of understanding, specific examples of the power conversion device are given below. For the conversion circuit having a structure as shown in Figure 7, as an example, a structure of the power conversion device may be as shown in Figure 10. An inductor L4, an inductor L5 and switch transistors Q6 to Q9 form a charging and discharging circuit. When charging of the bus capacitor is required, the controller controls the switch K1 and the switch K2 to be turned off. The electric energy stored in the battery pack is pre-charged to the bus capacitor C1 and the bus capacitor C2 through a closed path formed by the inductor L4, the parasitic diode of the switch transistor Q7, the resistor R1, the bus capacitor C1, the bus capacitor C2, the resistor R2, the parasitic diode of the switch transistor Q9 and the inductor L5. On determining that charging of the bus capacitor C1 and the bus capacitor C2 are completed, the switch K1 and the switch K2 are controlled to be turned on, so that the resistor R1 and the resistor R2 are short-circuited. Hence, the conversion circuit can be controlled to operate, and the power conversion device can obtain electric energy of the power supply through the conversion circuit, and supply the electric energy to the load connected at the back stage.

In a possible implementation, the conversion circuit is configured to pre-charge the bus capacitor branch. In this case, in order to disconnect the power supply from the conversion circuit when the external power supply fails, the power conversion device further includes a second switch module connected between the input terminal of the conversion circuit and the power supply. The second switch module is configured to control a connection between the conversion circuit and the power supply. The second switch module may include at least one switch. A selection and control method of the switch may be referred to the relevant introduction of the first switch module in the embodiments of the present disclosure, which is not repeated here.

In a possible implementation, the battery pack is configured to pre-charge the bus capacitor branch. In this case, in order to disconnect the battery pack from the battery charging and discharging circuit when the battery pack fails, the power conversion device further includes a third switch module connected between the battery pack and the charging and discharging circuit. The third switch module is configured to control a connection between the battery pack and the charging and discharging circuit. The third switch module may include at least one switch. A selection and control method of the switch may be referred to the relevant introduction of the first switch module in the embodiments of the present disclosure, which is not repeated here.

Based on the same concept, an uninterruptible power system is further provided in an embodiment of the present disclosure. The uninterruptible power system may include an inverter and the power conversion device as described above. The uninterruptible power system may further include a housing and multiple external interfaces provided on the housing. The power conversion device and the inverter may be arranged in the housing and connected to a power supply and a load through the external interfaces on the housing.

In an actual application, an input terminal of the inverter is connected to an output terminal of the conversion circuit, and an output terminal of the inverter is connected to the load. The inverter may convert a DC voltage outputted by the conversion circuit into an AC voltage required for powering the load, and thereby the load is powered.

In the embodiments of the present disclosure, if there is no special explanation or logical conflict, the terms and/or descriptions in different embodiments are consistent and can be referenced to each other. The technical features in different embodiments may be combined based on inherent logical relationships thereof to form a new embodiment.

Apparently, various modifications and variations to the embodiments of the present disclosure can be made by those skilled in the art without departing from the protection scope of the present disclosure. Hence, as the modifications and variations of the present disclosure fall within the scope of the claims of the present disclosure and equivalents thereof, the present disclosure is also intended to include such modifications and variations.

## Claims

1. A power conversion device, comprising a conversion circuit, a bus capacitor branch, a resistor module, a first switch module and a controller, wherein
an input terminal of the conversion circuit is configured to be connected to a power supply, and an output terminal of the conversion circuit is connected to the bus capacitor branch through the resistor module;
the first switch module is connected in parallel with the resistor module; and
the controller is connected to the first switch module, and is configured to control the first switch module to be turned off in a case where the conversion circuit is connected to the power supply and a voltage of the bus capacitor branch is less than a preset threshold, and control the first switch module to be turned on in a case where a voltage of the bus capacitor branch is greater than or equal to the preset threshold.

2. The power conversion device according to claim 1, wherein the resistor module comprises a first resistor which is in one-to-one correspondence with each bus capacitor in the bus capacitor branch, and the first resistor is connected in series with a corresponding bus capacitor.

3. The power conversion device according to claim 1, wherein a resistor in the resistor module is a thermistor.

4. The power conversion device according to claim 2, wherein the first switch module comprises a first switch which is in one-to-one correspondence with each first resistor, each first switch is connected in parallel with a corresponding first resistor, and a control terminal of each first switch is connected to the controller.

5. The power conversion device according to claim 1, further comprising a battery pack and a battery charging and discharging circuit, wherein
the battery pack is connected to a first terminal of the battery charging and discharging circuit; and
a second terminal of the battery charging and discharging circuit is connected to the output terminal of the conversion circuit.

6. The power conversion device according to claim 5, wherein the controller is further configured to:
control the first switch module to be turned off in a case where the battery pack is electrically connected to the bus capacitor branch through the battery charging and discharging circuit, and a voltage of the bus capacitor branch is less than the preset threshold, and
control the first switch module to be turned on in a case where a voltage of the bus capacitor branch is greater than or equal to the preset threshold.

7. The power conversion device according to claim 1 or 2, further comprising a second switch module connected between the input terminal of the conversion circuit and the power supply, wherein the second switch module is configured to control a connection between the conversion circuit and the power supply.

8. The power conversion device according to claim 5 or 6, further comprising a third switch module connected between the battery pack and the charging and discharging circuit, wherein the third switch module is configured to control a connection between the battery pack and the charging and discharging circuit.

9. The power conversion device according to claim 1 or 2, further comprising a voltage sensor, wherein the voltage sensor is connected to the bus capacitor branch and the controller, and the voltage sensor is configured to detect a voltage of the bus capacitor branch and output a detected voltage to the controller.

10. An uninterruptible power system, comprising an inverter and the power conversion device according to any one of claims 1 to 9, wherein an input terminal of the inverter is connected to an output terminal of the conversion circuit, and an output terminal of the inverter is configured to be connected to a load.
